# EUROPÄISCHE PATENTSCHRIFT

(11) **EP 1 972 837 B1**
(45) Veröffentlichungstag und Bekanntmachung des Hinweises auf die Patenterteilung: **05.05.2010**
(21) Anmeldenummer: 08004773.1
(22) Anmeldetag: 14.03.2008
(51) Int. Cl.: F16J 15/06, F16J 15/46, B29C 33/00

(54) **Dichteinrichtung für den Spalt zwischen zwei benachbarten, unnachgiebigen Maschinenteilen**
Sealing device for the gap between two neighbouring, inflexible machine components
Dispositif d'étanchéité pour l'espace entre deux composants de machines adjacents, inflexibles

(30) Priorität: 21.03.2007 DE 102007013450
(43) Veröffentlichungstag der Anmeldung: 24.09.2008
(73) Patentinhaber: FRIMO Group GmbH, 49504 Lotte (DE)
(72) Erfinder: Meyer, Ralf, 49751 Sögel (DE)
(74) Vertreter: HOFFMANN EITLE

(56) Entgegenhaltungen:
- EP-A- 1 361 380
- DE-A1-102004 038 114
- DE-U1- 20 214 798

## Beschreibung

### Technisches Gebiet

Die Erfindung betrifft eine Dichteinrichtung für den Spalt zwischen zwei benachbarten, unnachgiebigen Maschinenteilen, umfassend zumindest einen über einem unnachgiebigen Stützkörper elastisch dehnbaren Schlauch, der in eine Nut mit einer dem Spalt zugewandten Mündung eines der Maschinenteile eingefügt ist und der aufgeblasen an das der Mündung gegenüberliegende Maschinenteil anlegbar ist, wobei wenigstens ein Ende des Schlauches mit einer umlaufenden und in seinen Innenraum eingreifenden Einstülpung versehen ist, wobei der Schlauch nach dem Aufblasen auch radial außerhalb des Stützkörpers und damit auf der ganzen Länge der Nut an das andere Maschinenteil anlegbar ist und wobei die Nut im Bereich der Einstülpung mit wenigstens einer sich quer zur Längsrichtung erstreckenden, unnachgiebigen Hinterschneidung versehen ist, die den Schlauch im Bereich der Einstülpung zumindest im aufgeblasenen Zustand anliegend berührt.

### Stand der Technik

Eine solche Dichteinrichtung ist aus der DE OS 10 2004 038 114 bekannt. Der Schlauch und der Stützkörper sind dabei von kreisförmig begrenztem Profil. Hierdurch wird ein ausgezeichnetes Abdichtungsergebnis bei der Abdichtung von Werkzeugen erzielt, in denen Formteile aus Reaktionsschäumen erzeugt werden. Die Dauerhaltbarkeit ist jedoch, vor allem an den Enden des Schlauches, noch nicht ganz befriedigend.

### Darstellung der Erfindung

Der Erfindung liegt die Aufgabe zu Grunde, eine solche Dichteinrichtung derart weiter zu entwickeln, dass eine bessere Dauerhaltbarkeit erzielt wird. Es soll insbesondere vermiedenen werden, dass sich im Bereich der Einstülpung Risse in dem Schlauch ergeben.

Diese Aufgabe wird erfindungsgemäß bei einer Dichteinrichtung nach dem Oberbegriff durch die kennzeichnenden Merkmale von Anspruch 1 gelöst. Auf vorteilhafte Weiterbildungen nehmen die Unteransprüche Bezug.

Bei der erfindungsgemäßen Dichteinrichtung ist es vorgesehen, dass der Stützkörper, quer zur Längsrichtung der Nut betrachtet, ein im wesentlichen an die Kontur der Nut angepasstes Außenprofil hat und dass die Kontur der Nut und das Außenprofil des Stützkörpers, der in den Schlauch eingesetzt ist, sich parallel zueinander ertrecken, wobei die Einstülpung den Stützkörper auf seiner ganzen Länge übergreift. Überraschender Weise wird dadurch eine wesentlich bessere Dauerhaltbarkeit erzielt als bisher. Dies könnte darauf zurückzuführen sein, dass die zur Anwendung gelangenden, elastisch dehnbaren Schläuche aus elastomeren Werkstoffen stets gewisse Anteile von noch unvernetzten Werkstoffbestandteilen enthalten, die das Auftreten von Setzerscheinungen im Zuge von langanhaltenden Deformierungen nach sich ziehen. Dies hat im Bereich der Einstülpung des Schlauches der erfindungemäßen Dichteinrichtung zur Folge, dass sich eine gewisse Angleichung des Profils des herstellungsbedingt runden Schlauches an den Querschnitt des Stützkörpers ergibt und sich die Größe der jeweiligen Verformungswege des Schlauches beim jeweiligen Aufblasen vor allem im Bereich der durch die Einstülpung hochgradig vorbelasteten Faltungszonen vermindert. Auch an den Stellen der extremsten Vorbelastung wurden in langanhaltenden Dauerversuchen keine Haarrisse mehr gefunden.

Die Kontur des Schlauches 4 kann im übrigen kreisförmig begrenzt sein wie bisher. Dies führt im Bereich der freien Länge trotz Einfügung in eine im wesentlichen U-förmig in Richtung der Mündung geöffnete Nut 6 dort nicht zur Überlastungen des Schlauches 4 beim Aufblasen, weil sich die Detailverformungen dort besser ausgleichen können. Es ist somit nicht erforderlich, Sonderanfertigungen von Schläuchen mit einem besonderen, unrunden Profil zu verwenden.

Die bisher nur an den Enden und vor allem im Bereich der Einstülpung auftretenden Beschädigungen waren offenbar maßgeblich auf die dort gegebenen, besonders hohen Dehn- und Strauchbeanspruchungen zurückzuführen. Sie treten durch die erfindungsgemäße Einspannung der eingestülpten Enden des Schlauches zwischen der Wandung der Nut und einem an deren Kontur angepaßten Stützkörper nicht mehr.

Erfindungsgemäß erstrecken sich die Kontur der Nut und das Außenprofil des Stützkörpers im wesentlichen parallel zueinander. Die dynamischen Dehnungen des eingestülpten Schlauches sind bei einer solchen Bauform in allen Teilbereichen ganz besonders ausgeglichen. Überlastungen an bestimmten Stellen werden dadurch vermieden.

Die Kontur der Nut und das Profil des Stützkörpers sind, in Querrichtung betrachtet, vorteilhaft im wesentlichen U-förmig begrenzt. Hierdurch ist ein bedarfsweiser Austausch der Dichteinrichtung und des Schlauches besonders einfach möglich.

Die Oberfläche des Stützkörpers soll ausschließlich durch abgerundet ineinanderübergehende Teilflächen gebildet sein, um eine unerwünschte Beschädigung des Schlauches durch das Eindringen von scharfkantigen Ecken zu vermeiden.

Der kleinste Radius des Profils des Stützkörpers soll dabei 0,8 bis 1,5 mal so groß ausgebildet sein wie die Wandstärke D des Schlauches. Neben einer weitgehenden Anpassung an die Form des U - förmigen Profils der Nut resultiert daraus eine weitgehende Verminderung der Gefahr, dass sich der Stützkörper an den Ecken des Profils in den Schlauch einschneidet und den Schlauch durch Überlastung der Dehnbarkeit an diesen Stellen beschädigt.

Der Stützkörper kann zur weiteren Verbesserung der Dauerhaltbarkeit, parallel zur Längsrichtung der Nut betrachtet, zweckmäßig eine sich parallel zu deren Innenwandung erstreckende Oberfläche haben.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
- Fig. 1: eine Dichteinrichtung in längsgeschnittener Darstellung
- Fig. 2: eine Dichteinrichtung in quergeschnittener Darstellung

### Ausführung der Erfindung

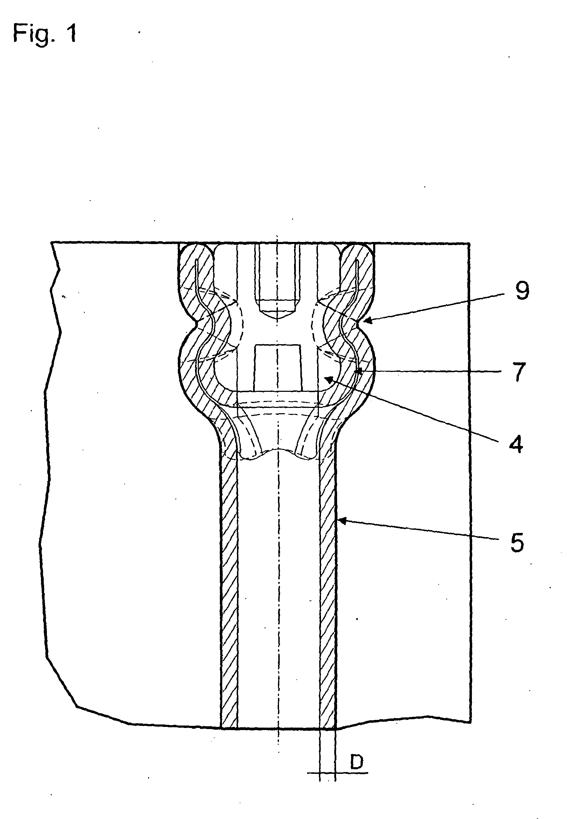

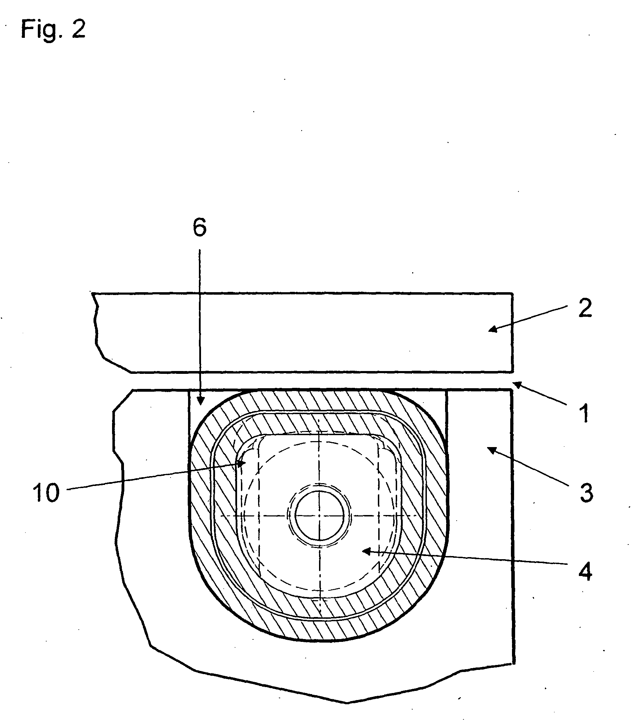

Die in Fig. 1 und Fig. 2 gezeigte Dichteinrichtung ist für die Abdichtung eines Werkzeuges für die Herstellung von Schaumformteilen aus Reaktionsschäumen bestimmt. Derartige Werkzeuge gelangen z.B. bei der Herstellung von Instrumententafeln und Innenraumverkleidungen von Kraftfahrzeugen zur Anwendung, die gewöhnlich aus einem Tragteil bestehen, auf dem ein Dekorationsstoff mittels einer Zwischenschicht aus Reaktionsschaum festgelegt ist. Um das Einlegen des Tragteils und die Entnahme des fertigen Formteils zu ermöglichen, sind solche Werkzeuge aufklappbar gestaltet. Um eine Verschmutzung der Umgebung durch den in flüssiger Form eingegebenen Reaktionsschaum zu verhindern sind die Werkzeuge mit einer aufblasbaren Dichteinrichtung versehen, die das Formnest umschließt. Die Dimensionen und damit auch die Dehnungen des in der Dichteinrichtung enthaltenen, aufblasbaren Schlauches sind, dem Anwendungszweck entsprechend erheblich. Vor allem im Bereich der Enden, die mit einer Einstülpung versehen sind, in die jeweils ein Stützkörper 4 zur Abdichtung bzw. zur Einspeisung von Druckluft eingesetzt ist, können sich kritische Belastungen ergeben. Der Stützkörper ist im wesentlichen unnachgiebig. Er kann aus Metall oder Kunststoff bestehen, z.B. aus Polyamid oder Polypropylen.

Fig. 1 zeigt eine Dichteinrichtung in quergeschnittener Darstellung, umfassend einen Stützkörper 4, der ein im wesentlichen an die Kontur der Nut 6 angepasstes Außenprofil hat. Der aus Gummi, Silicon oder Latex bestehende Schlauch 5 ist im Bereich seines Endes mit einer Einstülpung versehen und mit der Einstülpung auf den Stützkörper derart aufgestülpt, dass die Einstülpung den Stützkörper auf seiner ganzen Länge übergreift. Beim Einspeisen von Druckluft in den Schlauch dehnt sich dieser auf der ganzen Länge der Nut 6 in radialer Richtung aus und legt sich demgemäss dichtend auf der ganzen Länge der Nut 6 an den den Dichtspalt 1 begrenzenden Deckel 2 des Werkzeugs an.

Etwa im mittleren Bereich der Länge des Stützkörpers 4 sind auf beiden Seiten sich senkrecht zur Zeichenebene erstreckende Eintiefungen 10 vorgesehen, denen entsprechend geformte, in die Nut 6 vertikal eingreifende Vorsprünge 9 des Unterwerkzeugs 3 zugeordnet sind. Hierdurch sind Hinterscheidungen gebildet, die sich quer zur Längsrichtung des Schlauches 5 erstrecken und verhindern das sich der Schlauch bei vielen aufeinanderfolgenden Dehnprozessen axial in der Nut 6 verlagert. Natürlich können auch mehrere derartige Eintiefungen 10 und Vorsprünge in Längsrichtung hintereinanderliegend vorgesehen werden.

Die Kontur der Nut 6 und das Außenprofil des Stützkörpers 4 erstrecken sich im wesentlichen parallel zueinander.

Fig. 2 zeigt die bevorzugte Bauform, bei der die Kontur der Nut 6 und das Profil des Stützkörpers 4, in Querrichtung betrachtet, im wesentlichen U - förmig begrenzt sind.

Die Oberfläche des Stützkörpers 4 ist ausschließlich durch abgerundet ineinanderübergehende Teilflächen gebildet, wobei der kleinste Radius des Profils des Stützkörpers 4 ist 0,8 bis 1,5 mal so groß ist wie die Wandstärke D. des Schlauches 5. Hierdurch werden Überlastungen des Schlauches an den Ecken des Stützkörpers verhindert. Auch parallel zur Längsrichtung der Nut betrachtet, hat der Stützkörper 4, eine sich parallel zu deren Innenwandung erstreckende Oberfläche, die die Dauerhaltbarkeit verbessert.

Die mit der Erfindung erzielten Vorteile bestehen in einer einfachen herstell- und Montierbarkeit der Dichteinrichtung sowie in einer im Vergleich zum Stand der Technik wesentlich verbesserten Dauerhaltbarkeit.

## Patentansprüche

1. Dichteinrichtung für den Spalt (1) zwischen zwei benachbarten, unnachgiebigen Maschinenteilen (2, 3), umfassend zumindest einen über einem unnachgiebigen Stützkörper (4) elastisch dehnbaren Schlauch (5), der in eine Nut (6) mit einer dem Spalt (1) zugewandten Mündung eines der Maschinenteile (3) eingefügt ist und der aufgeblasen an das der Mündung (1) gegenüberliegende Maschinenteil (2) anlegbar ist, wobei wenigstens ein Ende des Schlauches (5) mit einer umlaufenden und in seinen Innenraum eingreifenden Einstülpung (7) versehen ist, wobei der Schlauch (5) nach dem Aufblasen auch radial außerhalb des Stützkörpers (4) und damit auf der ganzen Länge der Nut (6) an das andere Maschinenteil (2) anlegbar ist und wobei die Nut (6) im Bereich der Einstülpung (7) mit wenigstens einer sich quer zur Längsrichtung erstreckenden, unnachgiebigen Hinterschneidung (9) versehen ist, die den Schlauch (5) im Bereich der Einstülpung (7) zumindest im aufgeblasenen Zustand anliegend berührt, **dadurch gekennzeichnet, dass** der Stützkörper (4), quer zur Längsrichtung der Nut (6) betrachtet, ein im wesentlichen an die Kontur der Nut (6) angepasstes Außenprofil hat und dass die Kontur der Nut (6) und das Außenprofil des Stützkörpers (4), der in den Schlauch (5) eingesetzt ist, sich parallel zueinander erstrecken, wobei die Einstülpung (7) den Stützkörper (4) auf seiner ganzen Länge überbegreift.

2. Dichteinrichtung nach Anspruch 1, **dadurch gekennzeichnet, dass** die Kontur der Nut (6) und das Profil des Stützkörpers (4), in Querrichtung betrachtet, im wesentlichen U - förmig begrenzt sind.

3. Dichteinrichtung nach Anspruch 2, **dadurch gekennzeichnet, dass** der kleinste Radius des Profils des Stützkörpers (4) 0,8 bis 1,5 mal so groß ist wie die Wandstärke D des Schlauches (5).

4. Dichteinrichtung nach einem der Ansprüche 1 bis 3, **dadurch gekennzeichnet, dass** der Stützkörper (4), parallel zur Längsrichtung der Nut (6) betrachtet, eine sich parallel zu deren Innenwandung erstreckende Oberfläche hat.

5. Dichteinrichtung nach einem der Ansprüche 1 bis 4, **dadurch gekennzeichnet, dass** die Oberfläche des Stützkörpers (4) ausschließlich durch abgerundet ineinanderübergehende Teilflächen gebildet ist.

## Claims

1. Sealing device for the gap (1) between two adjacent, inflexible machine parts (2, 3), comprising at least one tube (5) which is elastically extendable over an inflexible supporting body (4) and which is inserted in a groove (6) having an opening facing towards the gap (1), of one of the machine parts (3), and which can be applied in an inflated state to the machine part (2) opposite the opening (1), at least one end of the tube (5) being provided with a peripheral inversion (7) engaging in its interior, the tube (5) after inflation also being capable of being applied to the other machine part (2) radially outside the supporting body (4) and therefore over the whole length of the groove (6), and the groove (6) in the region of the inversion (7) being provided with at least one inflexible undercut (9) which extends transversely to the longitudinal direction and which touches the tube (5) contiguously in the region of the inversion (7) at least in the inflated state, **characterised in that** the supporting body (4), seen transversely to the longitudinal direction of the groove (6), has an outer profile substantially adapted to the contour of the groove (6) and **in that** the contour of the groove (6) and the outer profile of the supporting body (4) which is inserted in the tube (5) extend parallel to each other, the inversion (7) engaging over the supporting body (4) over its whole length.

2. Sealing device according to claim 1, **characterised in that** the contour of the groove (6) and the profile of the supporting body (4), seen in the transverse direction, are defined substantially in a U shape.

3. Sealing device according to claim 2, **characterised in that** the smallest radius of the profile of the supporting body (4) is 0.8 to 1.5 times as great as the wall thickness D of the tube (5).

4. Sealing device according to any of claims 1 to 3, **characterised in that** the supporting body (4), seen parallel to the longitudinal direction of the groove (6), has a surface extending parallel to the inner wall thereof.

5. Sealing device according to any of claims 1 to 4, **characterised in that** the surface of the supporting body (4) is formed exclusively by partial surfaces merging with each other in a rounded form.

## Revendications

1. Dispositif d'étanchéité pour l'intervalle (1) entre deux parties de machine (2, 3) non déformables, adjacentes, comprenant au moins un tuyau souple (5), susceptible de s'allonger élastiquement par l'intermédiaire d'un corps de soutien (4) non déformable, tuyau souple inséré dans une rainure (6), munie d'une embouchure tournée vers l'intervalle (1), appartenant à l'une des parties de machine (3) et susceptible d'être appliqué, à l'état gonflé, sur la partie de machine (2) située en regard de l'embouchure (1), au moins une extrémité du tuyau souple (5) étant munie d'un retroussement intérieur (7) faisant le tour et s'engageant dans son espace intérieur, le tuyau souple (5), après gonflage, étant susceptible d'être appliqué également radialement à l'extérieur du corps de soutien (4) et, ainsi, sur toute la longueur de la rainure (6), sur l'autre partie de machine (2) et la rainure (6) étant munie, dans la zone du retroussement intérieur (7), d'au moins une contre-dépouille (9) non déformable, s'étendant transversalement à la direction longitudinale, contre-dépouille entrant en contact, avec appui au moins à l'état gonflé, avec le tuyau souple (5) dans la zone du retroussement intérieur (7), **caractérisé en ce que** le corps de soutien (4), observé transversalement à la direction longitudinale de la rainure (6), présente un profil extérieur sensiblement adapté au contour de la rainure (6), et **en ce que** le contour de la rainure (6) et le profil extérieur du corps de soutien (4), inséré dans le tuyau souple (5), s'étendent parallèlement l'un à l'autre, le retroussement intérieur (7) entourant le corps de soutien (4) sur toute sa longueur.

2. Dispositif d'étanchéité selon la revendication 1, **caractérisé en ce que** le contour de la rainure (6) et le profil du corps de soutien (4), observés en direction transversale, sont délimités sensiblement en forme de U.

3. Dispositif d'étanchéité selon la revendication 2, **caractérisé en ce que** le rayon minimal du profil du corps de soutien (4) est de 0,8 à 1,5 fois l'épaisseur de paroi D du tuyau souple (5).

4. Dispositif d'étanchéité selon l'une des revendications 1 à 3, **caractérisé en ce que** le corps de soutien (4), observé parallèlement à la direction longitudinale de la rainure (6), présente une surface s'étendant parallèlement à sa paroi intérieure.

5. Dispositif d'étanchéité selon l'une des revendications 1 à 4, **caractérisé en ce que** la surface du corps de soutien (4) est formée exclusivement par des surfaces partielles, se transformant les unes en les autres de manière arrondie.
